# NEW EUROPEAN PATENT SPECIFICATION

(11) **EP 3 028 578 B2**
(45) Date of publication and mention of the opposition decision: **12.03.2025**
(45) Mention of the grant of the patent: 06.05.2020
(21) Application number: 14831178.0
(22) Date of filing: 11.07.2014
(51) Int. Cl.: A23G 1/00, A23D 9/00, A23G 1/30

(54) **CHOCOLATE AND HARD BUTTER**
SCHOKOLADE UND HARTBUTTER
CHOCOLAT ET BEURRE DUR

(30) Priority: 29.07.2013 JP 2013156628
(43) Date of publication of application: 08.06.2016
(73) Proprietor: The Nisshin OilliO Group, Ltd., Tokyo 104-8285 (JP)
(72) Inventor: OONISHI, Kiyomi, Yokosuka-shi Kanagawa 239-0832 (JP)
(74) Representative: Winter, Brandl - Partnerschaft mbB
(86) International application number: PCT/JP2014/068603
(87) International publication number: WO 2015/016044

(56) References cited:
- EP-A1- 1 776 870
- EP-A1- 2 213 712
- WO-A1-2011/115063
- WO-A1-2012/139574
- WO-A1-2013/065726
- WO-A1-83/00418
- GB-A- 827 172
- JP-A- H07 155 106
- JP-A- H07 264 981
- US-A- 4 283 436
- E. DEFFENSE: "Fractionation of Palm Oil", JAOCS, vol. 62, no. 2, February 1985 (1985-02-01), DOI: 10.1007/BF02541408
- 1 January 2020, article GUNSTONE: " VEGETABLE OILS IN FOOD TECHNOLOGY", pages: 90
- "The use and applicability in cocoa butter equivalents (CBEs) in chocolate products", MASTERS THESIS OF LIESBETH DEPOORTERE, 2010
- INDUSTRIAL CHOCOLATE MANUFACTURE AND USE, 2009
- KYOUNG KYU KANG ET AL.: "Cocoa Butter Equivalents Prepared by Blending Fractionated Palm Stearin and Shea Stearin", FOOD SCI. BIOTECHNOL., vol. 22, no. 2, 2013, pages 347 - 352, DOI: 10.1007/s10068-013-0087-8

## Description

### Technical Field

### Background Art

The present invention relates to a chocolate having a soft meltability in the mouth and to a use of a hard butter for production of the chocolate.

Many of chocolates molded into block or plate shapes are produced with the addition of solid fats having relatively high melting points in addition to cacao butter so that the products will not deform due to softened chocolates. This addition of the solid fats seems to have resulted largely from the circumstance that the chocolates have been often subjected to high temperatures because of insufficient temperature control during distribution. In contrast, it has become possible to deliver food in various temperature ranges depending on the kinds of the food in recent years. This elimination of the needs for worrying about melting of chocolates during distribution is promoting development of chocolates having better meltabilities in the mouth.

In addition, although it has been conventionally said about desirable meltabilities in the mouth of chocolates that sharp (hard) meltabilities in the mouth are good corresponding to good snap properties (properties of breaking with a crackling sound), what are called soft meltabilities in the mouth are getting popular partly because of changes in preferences of consumers.

As one method for developing chocolates having better meltabilities in the mouth, use of palm medium melting point fractions (PMF) has been studied. For example, Patent Literature 1 discloses fat compositions containing the PMFs and SSO-type triglycerides in amounts required for stably forming β' crystals of the PMFs. Patent Literature 2 discloses hard butters made by adding not less than 1 wt% of polyglycerol fatty acid esters into fractions obtained by removing high melting point and low melting point fractions from PMFs by solvent fractionation. The hard butters disclosed in Patent Literatures 1 and 2, however, have the disadvantage that the resulting chocolates are poor in the chocolate flavor because the hard butters are used for non-tempering chocolates, and the usage of cocoa butter in chocolate mix is limited.

Regarding use of palm medium melting point fractions for tempering chocolates, Patent Literature 3, for example, discloses hard butters having increased rates of symmetrical triglycerides, the rates increased by fractionating PMFs after transesterification. Patent Literature 4 discloses hard butters obtained by repeating fractionation in combination of dry fractionation and solvent fractionation. In the obtained hard butters, the linoleyldipalmitin (P2L) contents are 2 to 8 wt%, and the oleoyldipalmitin (P2O) contents are not less than 70 wt%. However, temperature management during tempering treatment of chocolates that are made with hard butters disclosed in Patent Literatures 3 and 4 is extremely difficult, and the resulting chocolates have good snap properties and sharp meltabilities in the mouth, metaphorically speaking, sharp-edged meltabilities in the mouth like ice, not soft meltabilities in the mouth spreading softly in the mouth. Patent Literature 5 discloses a fat and oil composition for producing raw chocolate that curbs low-temperature bloom, particularly in chocolate products that contain seeds and nuts.

### Prior Art Documents

### Patent Literature

Patent Literature 1: JP-1993 (Heisei-5)-211837 A
Patent Literature 2: JP-2000-270769 A
Patent Literature 3: JP-1999 (Heisei-11)-169191 A
Patent Literature 4: JP-2000-336389 A
Patent Literature 5: WO 2011/115063 A1

### Summary of Invention

### Problems to be solved by Invention

An object of the present invention is to provide a chocolate that can be, for example, molded into a block or plate shape or granulated, and has a soft meltability in the mouth spreading softly in the mouth. Another object is to provide a use of a hard butter suitable for production of the chocolate.

The present inventors have found, after hard work to achieve the above objects, that the preset objects can be achieved by causing triglycerides constituting the oil-and/or-fat in a chocolate to be in a specific composition. In addition, the present inventors have found a hard butter having a specific triglyceride composition and being suitable for production of the chocolate of the present invention.

Specifically, one aspect of the present invention provides a chocolate containing an oil-and/or-fat in a content of 25 to 65 mass%. The oil-and/or-fat meets the requirements (1) to (5) below.
(1) The SOS content is 60 to 86 mass%.
(2) The POP content is 20 to 40 mass%.
(3) The StOSt content is 10 to 25 mass%.
(4) The POSt content is 15 to 30 mass%.
(5) The liquid oil-and/or-fat content is 14 to 30 mass%.
(6) The mass ratio (StOSt/POSt) of the StOSt content to the POSt content is not more than 1.2.

In the above requirements,
SOS: a triglyceride on which oleic acid is bonded at the 2 position and a saturated fatty acid having a carbon number of not less than 16 is bonded at the 1 and 3 positions,
POP: 1,3-dipalmitoyl-2-oleoylglycerin,
StOSt: 1,3-distearoyl-2-oleoylglycerin,
POSt: a triglyceride having an oleoyl group at the 2 position and having one palmitoyl group and one stearoyl group separately at the 1 and 3 positions, and
liquid oil-and/or-fat: a triglyceride on which a fatty acid having a carbon number of not less than 16 is bonded, the triglyceride containing not less than 2 double bonds per molecule.

A preferable aspect of the present invention provides the chocolate in which the oil- and/or-fat may further meet the requirement (7) below.
(7) The mass ratio (POP/(POSt + StOSt)) of the POP content to the sum of the POSt content and the StOSt content is not less than 0.50.

One aspect of the present invention provides a use of a hard butter for producing the chocolate of the present invention, wherein the hard butter meeting the requirements (a) to (e) below.
(a) The SOS content is 55 to 83 mass%.
(b) The POP content is 30 to 60 mass%.
(c) The StOSt content is 3 to 19 mass%.
(d) The POSt content is 3 to 19 mass%.
(e) The liquid oil-and/or-fat content is 10 to 35 mass%.
(f) The mass ratio (StOSt/POSt) of the StOSt content to the POSt content is not more than 2.5.

In the above requirements,
SOS: a triglyceride on which oleic acid is bonded at the 2 position and a saturated fatty acid having a carbon number of not less than 16 is bonded at the 1 and 3 positions,
POP: 1,3-dipalmitoyl-2-oleoylglycerin,
StOSt: 1,3-distearoyl-2-oleoylglycerin,
POSt: a triglyceride having an oleoyl group at the 2 position and having one palmitoyl group and one stearoyl group separately at the 1 and 3 positions, and
liquid oil-and/or-fat: a triglyceride on which a fatty acid having a carbon number of not less than 16 is bonded, the triglyceride containing not less than 2 double bonds per molecule.

A preferable aspect of the present invention provides the hard butter to be used in the present invention that may further meet the requirement (g) below.
(g) The mass ratio (POP/(POSt + StOSt)) of POP to the sum of the POSt content and the StOSt content is not more than 3.0.

A preferable aspect of the present invention provides the hard butter to be used in the present invention that may contain 45 to 90 mass% of an oil-and/or-fat A and 3 to 28 mass% of an oil-and/or-fat B. The oil-and/or-fat A may contain not less than 40 mass% of POP. The oil-and/or-fat B may contain not less than 60 mass% of StOSt.

One aspect of the present invention provides a method for producing the chocolate.

The method includes blending 10 to 35 mass% of the hard butter into raw materials for the chocolate. The oil- and/or-fat content in the chocolate is adjusted to 25 to 65 mass%. The resulting chocolate melt is tempering-treated. Then the chocolate melt is cooled and solidified.

One aspect of the present invention provides a food article including at least one of the chocolate and the hard butter to be used in the present invention.

The present invention can provide a chocolate that can be, for example, molded into a block or plate shape or granulated, and has a good blooming resistance and a soft meltability in the mouth spreading softly in the mouth. The present invention can also a used of a hard butter for production of the chocolate.

### Embodiments for carrying out Invention

### Definitions and Analysis

In the present invention, a triglyceride means a molecule having a structure in which three fatty acid molecules are bonded to a glycerol molecule through ester bonds. The 1, 2, and 3 positions of the triglyceride mean positions at which the fatty acids are bonded. The terms below will be used as abbreviations for constituent fatty acids of the triglyceride. S: A saturated fatty acid having a carbon number of not less than 16. P: Palmitic acid. St: Stearic acid. A: Arachidic acid. U: An unsaturated fatty acid having a carbon number of not less than 16. O: Oleic acid.

The triglyceride composition of an oil-and/or-fat may be analyzed by gas chromatography (according to JAOCS, vol. 70, 11, 1111-1114 (1993)) and silver ion column HPLC (according to J. High Resol. Chromatogr., 18, 105-107 (1995)).

Constituent fatty acids of an oil-and/or-fat may be analyzed by gas chromatography (according to AOCS Celf-96).

Hereinafter, the chocolate of the present invention will be described step by step. The chocolate of the present invention is not limited to those prescribed in "Fair Competition Codes concerning Labeling on Chocolates" (Japan Chocolate Industry Fair Trade Council) or in regulations, but means products which consist mainly of edible oil-and/or-fats and sugars with, if necessary, an addition of cacao components (cacao mass, cocoa powder, and other components), milk products, flavorings, emulsifiers, and other components, and are produced through chocolate production processes (all or some of a blending process, a refining process, a conching process, a molding process, a cooling process, and other processes). In addition, the chocolate of the present invention includes dark chocolates and milk chocolates as well as white chocolates and colored chocolates.

The chocolate of the present invention contains 25 to 65 mass% of an oil-and/or-fat. The oil-and/or-fat content in the chocolate of the present invention is preferably 28 to 60 mass%, more preferably 30 to 55 mass%. In the present invention, the oil-and/or-fat in the chocolate contains, in addition to the oil-and/or-fat to be blended, oil-and/or-fats (cocoa butter, milkfat, and other materials) derived from oil-containing raw materials (cacao mass, cocoa powder, dry whole milk, and other materials). Typically, the oil-and/or-fat (cocoa butter) content in cacao mass is 55 mass%, the oil-and/or-fat (cocoa butter) content in cocoa powder is 11 mass%, and the oil-and/or-fat (milkfat) content in dry whole milk is 25 mass%, for example. The oil-and/or-fat in the chocolate is the sum of products of the blending amounts (mass%) of the raw materials in the chocolate and the respective oil contents.

The chocolate of the present invention is a chocolate suitable for tempering and characterized in that the oil- and/or-fat in the chocolate contains an SOS-type triglyceride (hereinafter, also referred to as SOS) on which oleic acid is bonded at the 2 position and a saturated fatty acid having a carbon number of not less than 16 is bonded at the 1 and 3 positions. The SOS content is 60 to 86 mass% of the oil-and/or-fat in the chocolate. The SOS content is preferably 63 to 83 mass%, further preferably 65 to 81 mass%. The saturated fatty acid bonded at the 1 and 3 positions of SOS is not necessarily of the same kind as long as the bonded fatty acids are saturated fatty acids each having a carbon number of not less than 16. The saturated fatty acid bonded at the 1 and 3 positions preferably has a carbon number of 16 to 26, more preferably a carbon number of 16 to 20. The content of the saturated fatty acid having a carbon number of 16 to 18 is preferably not less than 90 mass%, more preferably not less than 95 mass%.

The chocolate of the present invention is characterized in that the oil-and/or-fat in the chocolate contains, as one of the SOS-type triglycerides, the POP-type triglyceride (1,3-dipalmitoyl-2-oleoylglycerin, hereinafter also referred to as POP) on which oleic acid is bonded at the 2 position and palmitic acid is bonded at the 1 and 3 positions. The POP content in the oil-and/or-fat in the chocolate is 20 to 40 mass%. The POP content is preferably 22 to 35 mass%, further preferably 24 to 31.5 mass%.

The chocolate of the present invention is characterized in that the oil-and/or-fat in the chocolate contains, as one of the SOS-type triglycerides, the StOSt-type triglyceride (1,3-distearoyl-2-oleoylglycerin, hereinafter also referred to as StOSt) on which oleic acid is bonded at the 2 position and stearic acid is bonded at the 1 and 3 positions. The StOSt content in the oil-and/or-fat in the chocolate is 10 to 25 mass%. The StOSt content is preferably 13 to 25 mass%, further preferably 15 to 22 mass%.

The chocolate of the present invention is characterized in that the oil-and/or-fat in the chocolate contains, as one of the SOS-type triglycerides, a POSt-type triglyceride (a triglyceride having an oleoyl group at the 2 position and having one palmitoyl group and one stearoyl group separately at the 1 and 3 positions, hereinafter also referred to as POSt). The POSt content in the oil-and/or-fat in the chocolate is 15 to 30 mass%. The POSt content is preferably 17 to 30 mass%, further preferably 17 to 28 mass%.

The chocolate of the present invention preferably has a mass ratio (hereinafter, also referred to as StOSt/POSt) of the StOSt content to the POSt content in the oil-and/or-fat in the chocolate of not more than 1.2. StOSt/POSt is more preferably not more than 1.1, further preferably 0.7 to 1.0.

The chocolate of the present invention preferably has a mass ratio (hereinafter, also referred to as POP/(POSt + StOSt)) of the POP content to the sum of the POSt content and the StOSt content in the oil-and/or-fat in the chocolate of not less than 0.50. POP/(POSt + StOSt) is more preferably not less than 0.60, further preferably 0.70 to 1.1.

The chocolate of the present invention is characterized in that the oil-and/or-fat in the chocolate contains a liquid oil-and/or-fat. The liquid oil-and/or-fat content in the oil- and/or-fat in the chocolate is 14 to 30 mass%. The liquid oil-and/or-fat content is preferably 14 to 25 mass%, further preferably 14 to 22 mass%. In the present invention, the liquid oil- and/or-fat is the total amount of triglycerides on which fatty acids having carbon numbers of not less than 16 are bonded, the triglycerides containing not less than 2 double bonds per molecule. Examples of the triglycerides in the liquid oil-and/or-fat contained in the oil- and/or-fat in the chocolate of the present invention include PLP, POO, PLSt, POL, PLL, StOO, StLSt, OOO, StOL, and OOL, where P is palmitic acid, L is linoleic acid, O is oleic acid, and St is stearic acid.

An oil-and/or-fat content and a triglyceride constitution in the chocolate within the above ranges allow the chocolate of the present invention to be a chocolate that can be, for example, molded into a block or plate shape or granulated, and has a good blooming resistance and a soft meltability in the mouth spreading softly in the mouth.

Any oil-and/or-fat raw materials may be used for the chocolate of the present invention as long as the oil-and/or-fat content in the chocolate and the triglyceride constitution satisfy the above ranges. For example, coconut oil, palm kernel oil, palm oil, fractionated palm oil (such as palm olein and palm super olein), shea butter, fractionated shea oil, sal butter, fractionated sal oil, illipe butter, soybean oil, rapeseed oil, cotton seed oil, safflower oil, sunflower oil, rice oil, corn oil, sesame oil, olive oil, milkfat, cocoa butter, and other oil- and/or-fats, mixtures of these oils, and processed oil-and/or-fats of these oils may be used. In particular, the hard butter to be used in the present invention is used for the chocolate of the present invention as the raw material for the oil-and/or-fat in the chocolate.

Hereinafter, the hard butter to be used in the present invention will be described step by step.

The hard butter to be used in the present invention is suitable for tempering chocolates and characterized in that the hard butter contains an SOS-type triglyceride (hereinafter, also referred to as SOS) on which oleic acid is bonded at the 2 position and a saturated fatty acid having a carbon number of not less than 16 is bonded at the 1 and 3 positions. The SOS content in the hard butter is 55 to 83 mass%. The SOS content is preferably 58 to 80 mass%, further preferably 60 to 78 mass%. The saturated fatty acid bonded at the 1 and 3 positions of SOS is not necessarily of the same kind as long as the bonded fatty acids are saturated fatty acids each having a carbon number of not less than 16. The saturated fatty acid bonded at the 1 and 3 positions preferably has a carbon number of 16 to 26, more preferably a carbon number of 16 to 20. The content of the saturated fatty acid having a carbon number of 16 to 18 is preferably not less than 90 mass%, more preferably not less than 95 mass%.

The hard butter to be used in the present invention is characterized in that the hard butter contains, as one of the SOS-type triglycerides, the POP-type triglyceride (1,3-dipalmitoyl-2-oleoylglycerin, hereinafter also referred to as POP) on which oleic acid is bonded at the 2 position and palmitic acid is bonded at the 1 and 3 positions. The POP content in the hard butter is 30 to 60 mass%. The POP content is preferably 35 to 55 mass%, further preferably 40.5 to 53 mass%.

The hard butter to be used in the present invention is characterized in that the hard butter contains, as one of the SOS-type triglycerides, the StOSt-type triglyceride (1,3-distearoyl-2-oleoylglycerin, hereinafter also referred to as StOSt) on which oleic acid is bonded at the 2 position and stearic acid is bonded at the 1 and 3 positions. The StOSt content in the hard butter is 3 to 19 mass%. The StOSt content is preferably 4 to 16 mass%, further preferably 5 to 13 mass%.

The hard butter to be used in the present invention is characterized in that the hard butter contains, as one of the SOS-type triglycerides, a POSt-type triglyceride (a triglyceride having an oleoyl group at the 2 position and having one palmitoyl group and one stearoyl group separately at the 1 and 3 positions, hereinafter also referred to as POSt). The POSt content in the hard butter is 3 to 19 mass%. The POSt content is preferably 4 to 16 mass%, further preferably 5 to 13 mass%.

The hard butter to be used in the present invention preferably has a mass ratio (hereinafter also referred to as StOSt/POSt) of the StOSt content to the POSt content of not more than 2.5. StOSt/POSt is preferably not more than 1.1, further preferably 0.8 to 1.1.

The hard butter to be used in the present invention preferably has a mass ratio (hereinafter also referred to as POP/(POSt + StOSt)) of the POP content to the sum of the POSt content and the StOSt content of not more than 3.0. POP/(POSt + StOSt) is more preferably not more than 2.5, further preferably 2.0 to 2.5.

The hard butter to be used in the present invention is characterized in that the hard butter contains a liquid oil-and/or-fat. The liquid oil-and/or-fat content in the hard butter is 10 to 35 mass%. The liquid oil-and/or-fat content is preferably 16 to 32 mass%, further preferably 20 to 32 mass%. In the present invention, the liquid oil-and/or-fat is the total amount of triglycerides on which fatty acids having carbon numbers of not less than 16 are bonded, the triglycerides containing not less than 2 double bonds per molecule. Examples of the triglycerides in the liquid oil-and/or-fat contained in the hard butter to be used in the present invention include PLP, POO, PLSt, POL, PLL, StOO, StLSt, OOO, StOL, and OOL, where P is palmitic acid, L is linoleic acid, O is oleic acid, and St is stearic acid.

A triglyceride constitution within the above ranges in the hard butter to be used in the present invention allows the chocolate produced using the hard butter to be used in the present invention to be easily adjusted to a chocolate that can be, for example, molded into a block or plate shape or granulated, and has a good tempering suitability, a good blooming resistance, and a soft meltability in the mouth spreading softly in the mouth.

Any oil-and/or-fat raw materials and any processing methods may be used for the hard butter to be used in the present invention as long as the materials and the methods satisfy the constituent features of the present invention. Natural oil-and/or-fat raw materials may be used individually or in a blend of not less than two of the materials. In addition, fractionated, transesterified, or hydrogenated oil-and/or-fats may be used, for example. Examples of preferable oil-and/or-fat raw materials used for the hard butter to be used in the present invention include fractionated palm oil, shea butter stearin, sal butter stearin, and oil-and/or-fats rich in the SOS-type triglycerides produced by transesterification.

As the fractionated palm oil, both an olein fraction (liquid fraction) and a stearin fraction (solid fat fraction) that are obtained by dry-fractionating, solvent-fractionating, or emulsion-fractionating palm oil may be used. A medium melting point fraction of palm oil (hereinafter also referred to as a PMF) such as an olein fraction that is obtained by further fractionating a palm stearin fraction and a stearin fraction that is obtained by further fractionating a palm olein fraction may be a supply source of the POP-type triglyceride contained in the hard butter to be used in the present invention.

The palm olein fraction, or an olein fraction obtained by further subjecting the palm olein fraction to two-stage fractionation or three-stage fractionation may be a supply source of the liquid oil-and/or-fat contained in the hard butter to be used in the present invention. The fractionated palm soft oils are preferable as supply sources of the liquid oil-and/or-fat (triglycerides on which fatty acids having carbon numbers of not less than 16 are bonded, the triglycerides containing not less than 2 double bonds per molecule) contained in hard butter to be used in the present invention.

The oil-and/or-fat rich in the SOS-type triglycerides can be produced by, for example, transesterification reactions by known methods using an oil-and/or-fat such as high-oleic sunflower oil containing much oleic acid at the 2 positions of triglycerides, stearic acid ethyl ester, palmitic acid ethyl ester, and other materials, and using an enzyme preparation having 1,3-position selectivity. Separately collecting the medium melting point fraction by fractionation increases the concentration of the SOS-type triglycerides, so that the oil-and/or-fat rich in the SOS-type triglycerides may be a preferable supply source of SOS for the hard butter to be used in the present invention and, in particular, is preferable as a supply source of the StOSt-type triglyceride.

The hard butter to be used in the present invention preferably contains an oil- and/or-fat A containing not less than 40 mass% of POP. Examples of the oil-and/or-fat A include the medium melting point fraction of palm oil, the fraction containing not less than 40 mass% of POP. The POP content in the oil-and/or-fat A is more preferably 40 to 75 mass%, further preferably 44 to 73 mass%. In addition, the hard butter to be used in the present invention preferably contains an oil-and/or-fat B containing not less than 60 mass% of StOSt. Examples of the oil-and/or-fat B include an oil-and/or-fat containing not less than 60 mass% of StOSt, such as shea butter stearin, sal butter stearin, and the oil-and/or-fat obtained by transesterification and fractionating of high-oleic sunflower oil and stearic acid ethyl ester . In particular, an oil- and/or-fat having a low arachidic acid content obtained by transesterification and fractionation is preferable. The StOSt content in the oil-and/or-fat B is more preferably 60 to 75 mass%, further preferably 65 to 75 mass%. In addition, the hard butter to be used in the present invention preferably contains an oil-and/or-fat C that contains not less than 50 mass% of triglycerides on which fatty acids having carbon numbers of not less than 16 are bonded, the triglycerides containing not less than 2 double bonds per molecule. Examples of the oil-and/or-fat C include liquid oils such as rapeseed oil, soybean oil, corn oil, cotton seed oil, and sunflower oil, and the fractionated palm soft oils. In particular, the fractionated palm soft oils are preferable. The content of the triglycerides on which fatty acids having carbon numbers of not less than 16 are bonded, the triglycerides containing not less than 2 double bonds per molecule in the oil-and/or-fat C is more preferably 50 to 85 mass%, further preferably 50 to 80 mass%.

The hard butter to be used in the present invention preferably contains 45 to 90 mass% of the oil-and/or-fat A containing not less than 40 mass% of POP, and 3 to 28 mass% of the oil- and/or-fat B containing not less than 60 mass% of StOSt, more preferably contains 50 to 90 mass% of the oil-and/or-fat A and 6 to 22 mass% of the oil- and/or-fat B. When adjustment of the liquid oil-and/or-fat content is necessitated, the content of the oil-and/or-fat C that contains not less than 50 mass% of the triglycerides on which fatty acids having carbon numbers of not less than 16 are bonded, the triglycerides containing not less than 2 double bonds per molecule is preferably 1 to 40 mass%, more preferably 5 to 30 mass%.

Any oil-and/or-fat raw materials other than the above-described oil-and/or-fats may be used for the hard butter to be used in the present invention as long as the materials satisfy the constituent features of the present invention. For example, not less than one may be selected and used from animal and vegetable oil-and/or-fats such as soybean oil, rapeseed oil, palm oil, cotton seed oil, safflower oil, sunflower oil, rice oil, corn oil, sesame oil, olive oil, beef tallow, lard, and milkfat and processed oil-and/or-fats of these oil-and/or-fats.

A small amount of components, other than oil-and/or-fats, commonly added to hard butters may be added to the hard butter to be used in the the present invention as long as the components do not impair the effects of the present invention. These components are preferably oil-soluble components, which dissolve in oil-and/or-fats, and examples of the components include emulsifiers, antioxidants (such as tocopherols and lecithin), and flavorings. The amount of these additives is preferably less than 5 mass%, more preferably less than 3 mass%, and further preferably less than 1 mass% of the hard butter.

The chocolate of the present invention is preferably a chocolate in which the hard butter to be used in the present invention is used as a raw material. The chocolate of the present invention can be easily prepared using preferably 10 to 35 mass%, more preferably 15 to 30 mass% of the hard butter to be used in the present invention. The chocolate of the present invention preferably contains cocoa butter as an oil-and/or-fat other than the hard butter to be used in the present invention in the chocolate. The chocolate of the present invention preferably contains 10 to 35 mass%, more preferably 15 to 30 mass% of cocoa butter.

The chocolate of the present invention preferably contains sugars in addition to oil-and/or-fats. Examples of the sugars that may be used include sucrose (sugar and powdered sugar), lactose, glucose, fructose, maltose, hydrogenated starch saccharide, liquid sugar, enzymatic invert syrup, isomerized liquid sugars, sucrose-coupled syrup, reducing sugar polydextrose, oligosaccharide, sorbitol, reducing lactose, trehalose, xylose, xylitose, maltitol, erythritol, mannitol, raffinose, and dextrin. The sugar content in the chocolate of the present invention is preferably 20 to 60 mass%, more preferably 25 to 55 mass%, and further preferably 30 to 50 mass%.

Raw materials, other than oil-and/or-fats and sugars, commonly blended into chocolates may be used for the chocolate of the present invention. Specifically, milk products such as dry whole milk and skim milk powder, cacao components such as cacao mass and cocoa powder, soy flour, soy protein, processed fruit products, processed vegetable products, various powders such as green tea powder and coffee powder, gums, starches, antioxidants, colorants, and flavorings may be used, for example.

The chocolate of the present invention can be produced by conventionally known methods. The chocolate of the present invention can be produced, for example, using oil- and/or-fat, cacao components, sugars, milk products, emulsifiers, and other materials as raw materials and by performing a blending process, a refining process (refining), a conching process (conching), a cooling process, and other processes so that the final oil-and/or-fat content in the chocolate will be 25 to 65 mass%. In particular, it is preferable to produce a tempering chocolate by performing tempering treatment after the conching process. The tempering treatment is an operation to form crystalline nuclei of stable crystals in order to solidify the SOS-type triglycerides in the oil-and/or-fat in the chocolate in form of stable crystals. The tempering treatment is, for example, an operation of decreasing the product temperature of the chocolate that has been molten at 40°C to 50°C to about 26°C to 29°C and heating the chocolate again to about 28°C to 31°C. A seed agent that is stable crystals of the SOS-type triglycerides may be used instead of the tempering operation.

The chocolate of the present invention is a chocolate that can be, for example, molded into a block or plate shape or granulated, and has a good blooming resistance and a soft meltability in the mouth spreading softly in the mouth. The chocolate of the present invention may be blended, for example, into dough of confectionery and bakery products such as bread, cakes, western confectionery, baked confectionery, donuts, and cream puffed confectionery, in form of a coating, a filling, or chips, in addition to being directly eaten as a cut-out chocolate block.

### Examples

Next, the present invention will be described in further detail in reference to Examples and Comparative Examples, but the present invention is not limited to these Examples and Comparative Examples at all.

Hereinafter, "%" represents mass% unless otherwise noted.

The triglyceride composition of the oil-and/or-fat was analyzed by gas chromatography (according to JAOCS, vol. 70, 11, 1111-1114 (1993)) and silver ion column HPLC (according to J. High Resol. Chromatogr., 18, 105-107 (1995)).

Constituent fatty acids of the oil-and/or-fat were analyzed by gas chromatography (according to AOCS Celf-96).

### [Production of Hard Butters]

High-oleic sunflower oil and stearic acid ethyl ester were transesterified using a 1,3-position-specific lipase to cause a reaction of stearic acid to be bonded at the 1 or 3 position of the triglycerides. The resulting transesterified oil was fractionated to produce an oil-and/or-fat B (having a StOSt content of 71.2 mass%, The Nisshin OilliO Group, Ltd.: an own product) having an increased StOSt-type triglyceride concentration.

The oil-and/or-fat B was mixed with an oil-and/or-fat A-1 (a palm medium melting point fraction 1 having a POP content of 71.7 mass%, an own product of The Nisshin OilliO Group, Ltd.), an oil-and/or-fat A-2 (a palm medium melting point fraction 2 having a POP content of 62.4 mass%, an own product of The Nisshin OilliO Group, Ltd.), an oil- and/or-fat A-3 (a palm medium melting point fraction 3 having a POP content of 44.1 mass%, an own product of The Nisshin OilliO Group, Ltd.), and an oil-and/or-fat C (a fractionated palm soft oil having a liquid oil-and/or-fat content of 77.0 mass%, an own product of The Nisshin OilliO Group, Ltd.) in various ratios, and hard butters of Examples 1 to 3 and Comparative Examples 1 and 2 listed in Table 1 were obtained. Examples 1 to 3 are not the embodiments of the present invention.

### [Production of Chocolates]

With the raw material formulations listed in Table 2, the hard butters of Examples 1 to 3 and Comparative Examples 1 and 2 were respectively used to produce dark chocolates (having an oil-and/or-fat content of 40 mass%) of Examples 4 to 6 and Comparative Examples 3 and 4, and also respectively used to produce milk chocolates (having an oil- and/or-fat content of 50 mass%) of Examples 7 to 9 and Comparative Examples 5 and 6. The chocolates were produced according to the conventional method by blending, refining, conching, tempering-treating, and cooling to solidify the chocolates.

**[Table 2]**

| [Table 2] Raw material formulations of chocolates (%) | | |
|---|---|---|
| | Dark chocolate | Milk chocolate |
| Cocoa butter*1 | - | 7.0 |
| Hard butter | 20.75 | 28.6 |
| Cacao mass*1 | 35 | 20.5 |
| Dry whole milk | - | 12.5 |
| Powdered sugar (sugar) | 43.7 | 30.85 |
| Lecithin | 0.5 | 0.5 |
| Flavorings | 0.05 | 0.05 |
| Total | 100 | 100 |
| *1: The composition of cocoa butter and cacao-mass-containing cocoa butter: an SOS content of 85.3 mass%, a POP content of 15.4 mass%, an StOSt content of 28.6 mass%, a POSt content of 39.7 mass%, and a liquid oil- and/or-fat content of 11.9 mass%. | | |

### [Evaluation of Chocolates]

The demoldability, the blooming resistance, and the meltability in the mouth were evaluated for the dark chocolates of Examples 4 to 6 and Comparative Examples 3 and 4 and the milk chocolates of Examples 7 to 9 and Comparative Examples 5 and 6 produced above, according to the evaluating method below.

### [Method for Evaluating Chocolates]

### (1) Method for evaluating demoldability

Demolding percentage (percentage of part of the chocolate that could be removed from the mold) 15 minutes after cooling solidification at 10°C
⊚: Very good (The demolding percentage was not less than 90%)
○: Good (The demolding percentage was not less than 70% and less than 90%)
Δ: Part of the chocolate remained (The demolding percentage was more than 0% and less than 70%)
×: No good (The demolding percentage was 0%)

### (2) Method for evaluating blooming resistance

Number of days until blooming occurred when the demolded chocolate was kept in a room in which the temperature was controlled to be 20°C (±2°C)
⊚: Very good (not less than 180 days)
○: Good (not less than 90 days and less than 180 days)
Δ: Poor (not less than 30 days and less than 90 days)
×: No good (less than 30 days)

### (3) Method for evaluating meltability in the mouth

Five panelists performed comprehensive evaluation according to the criteria below.
⊚: Soft meltability in the mouth spreading softly in the mouth, very good
○: Soft meltability in the mouth spreading softly in the mouth, good
Δ: Refreshing meltability in the mouth
▲: Usual meltability in the mouth
×: Poor in meltability in the mouth

### [Evaluation Results of Chocolates]

Tables 3 and 4 lists the triglyceride constitutions of the oil-and/or-fats and the evaluation results of the dark chocolates of Examples 4 to 6 and Comparative Examples 3 and 4 and the milk chocolates of Examples 7 to 9 and Comparative Examples 5 and 6 evaluated above.

**[Table 3]**

| [Table 3] Triglyceride constitutions and evaluation results of dark chocolates | | | | | | |
|---|---|---|---|---|---|---|
| | | Example 4 | Example 5 | Example 6 | Comparative Example 3 | Comparative Example 4 |
| Hard butter used | | Example 1 | Example 2 | Example 3 | Comparative Example 1 | Comparative Example 2 |
| | Oil-and/or-fat content (%) | 40 | 40 | 40 | 40 | 40 |
| Triglyceride composition (%) | | | | | | |
| | SOS | 75.7 | 73.8 | 80.1 | 87.0 | 77.8 |
| | POP | 26.6 | 29.7 | 34.8 | 44.6 | 22.7 |
| | StOSt | 23.4 | 18.5 | 18.9 | 14.7 | 29.3 |
| | POSt | 24.0 | 23.9 | 25.4 | 26.9 | 24.0 |
| | Liquid oil-and/or-fat | 18.8 | 20.4 | 15.6 | 8.5 | 17.2 |
| Triglyceride content ratio | | | | | | |
| | StOSt/POSt | 1.0 | 0.8 | 0.7 | 0.5 | 1.2 |
| | POP/(POSt + StOSt) | 0.6 | 0.7 | 0.8 | 1.1 | 0.4 |
| Evaluation result | | | | | | |
| | Demoldability | ⊚ | ⊚ | ⊚ | Δ | ⊚ |
| | Blooming resistance | ⊚ | ⊚ | ○ | × | ⊚ |
| | Meltability in the mouth | ○ | ⊚ | ○ | Δ | ▲ |

**[Table 4]**

| [Table 4] Triglyceride compositions and evaluation results of milk chocolates | | | | | | |
|---|---|---|---|---|---|---|
| | | Example 7 | Example 8 | Example 9 | Comparative Example 5 | Comparative Example 6 |
| Hard butter used | | Example 1 | Example 2 | Example 3 | Comparative Example 1 | Comparative Example 2 |
| | Oil-and/or-fat content (%) | 50 | 50 | 50 | 50 | 50 |
| Triglyceride composition (%) | | | | | | |
| | SOS | 69.4 | 67.3 | 74.3 | 81.9 | 71.7 |
| | POP | 26.8 | 30.3 | 35.8 | 46.6 | 22.4 |
| | StOSt | 21.1 | 15.7 | 16.1 | 11.5 | 27.5 |
| | POSt | 19.9 | 19.8 | 21.5 | 23.1 | 19.9 |
| | Liquid oil-and/or-fat | 18.8 | 20.5 | 15.2 | 7.4 | 17.0 |
| Triglyceride content ratio | | | | | | |
| | StOSt/POSt | 1.1 | 0.8 | 0.7 | 0.5 | 1.4 |
| | POP/(POSt + StOSt) | 0.7 | 0.9 | 1.0 | 1.3 | 0.5 |
| Evaluation result | | | | | | |
| | Demoldability | ⊚ | ⊚ | ⊚ | Δ | ⊚ |
| | Blooming resistance | ⊚ | ⊚ | ○ | × | ⊚ |
| | Meltability in the mouth | ○ | ⊚ | ○ | Δ | Δ |

## Claims

1. A chocolate comprising
an oil-and/or-fat in a content of 25 to 65 mass%, wherein the oil-and/or-fat meets the following requirements (1) to (6):
(1) an SOS content is 60 to 86 mass%;
(2) a POP content is 20 to 40 mass%;
(3) an StOSt content is 10 to 25 mass%;
(4) a POSt content is 15 to 30 mass%;
(5) a liquid oil-and/or-fat content is 14 to 30 mass%; and
(6) a mass ratio (StOSt/POSt) of the StOSt content to the POSt content is not more than 1.2,wherein
SOS: a triglyceride on which oleic acid is bonded at a 2 position and a saturated fatty acid having a carbon number of not less than 16 is bonded at 1 and 3 positions;
POP: 1,3-dipalmitoyl-2-oleoylglycerin;
StOSt: 1,3-distearoyl-2-oleoylglycerin;
POSt: a triglyceride comprising an oleoyl group at a 2 position and comprising one palmitoyl group and one stearoyl group separately at 1 and 3 positions; and
liquid oil-and/or-fat: a triglyceride on which a fatty acid having a carbon number of not less than 16 is bonded, the triglyceride comprising not less than 2 double bonds per molecule.

2. The chocolate according to claim 1, wherein the oil-and/or-fat further meets the following requirement (7):
(7) a mass ratio (POP/(POSt + StOSt)) of the POP content to a sum of the POSt content and the StOSt content is not less than 0.50.

3. Use of a hard butter for producing the chocolate according to claim 1 or 2, wherein the hard butter meets the following requirements (a) to (f):
(a) an SOS content is 55 to 83 mass%;
(b) a POP content is 30 to 60 mass%;
(c) an StOSt content is 3 to 19 mass%;
(d) a POSt content is 3 to 19 mass%;
(e) a liquid oil-and/or-fat content is 10 to 35 mass%; and
(f) a mass ratio (StOSt/POSt) of the StOSt content to the POSt content is not more than 2.5,wherein
SOS: a triglyceride on which oleic acid is bonded at a 2 position and a saturated fatty acid having a carbon number of not less than 16 is bonded at 1 and 3 positions;
POP: 1,3-dipalmitoyl-2-oleoylglycerin;
StOSt: 1,3-distearoyl-2-oleoylglycerin;
POSt: a triglyceride comprising an oleoyl group at a 2 position and comprising one palmitoyl group and one stearoyl group separately at 1 and 3 positions; and
liquid oil-and/or-fat: a triglyceride on which a fatty acid having a carbon number of not less than 16 is bonded, the triglyceride comprising not less than 2 double bonds per molecule.

4. Use of the hard butter according to claim 3, wherein the hard butter further meets the following requirement (g):
(g) a mass ratio (POP/(POSt + StOSt)) of POP to a sum of the POSt content and the StOSt content is not more than 3.0.

5. Use of the hard butter according to any one of claims 3 to 4, wherein the hard butter comprises:
45 to 90 mass% of an oil-and/or-fat A comprising not less than 40 mass% of POP; and 3 to 28 mass% of an oil-and/or-fat B comprising not less than 60 mass% of StOSt.

6. A method for producing the chocolate according to any one of claims 1 to 2, the method comprising:
blending 10 to 35 mass% of the hard butter as specified in any one of claims 3 to 5 into a raw material for the chocolate;
adjusting an oil-and/or-fat content in the chocolate to be 25 to 65 mass%; tempering-treating a resulting chocolate melt; and
cooling and solidifying the chocolate melt.

7. A confectionery and bakery products comprising
the chocolate according to any one of claims 1 to 2 in form of a coating or a filling.

## Patentansprüche

1. Schokolade, umfassend
ein Öl und/oder Fett mit einem Gehalt von 25 bis 65 Massen-%, wobei das Öl und/oder Fett die folgenden Anforderungen (1) bis (6) erfüllt:
(1) ein SOS-Gehalt beträgt 60 bis 86 Massen-%;
(2) ein POP-Gehalt beträgt 20 bis 40 Massen-%;
(3) ein StOSt-Gehalt beträgt 10 bis 25 Massen-%;
(4) ein POSt-Gehalt beträgt 15 bis 30 Massen-%;
(5) ein Gehalt an flüssigem Öl- und/oder Fett beträgt 14 bis 30 Massen-%; und
(6) ein Massenverhältnis (StOSt/POSt) des StOSt-Inhalts zum POSt-Inhalt beträgt nicht mehr als 1,2,
wobei
SOS: ein Triglycerid ist, an welchem Ölsäure in Position 2 gebunden ist, und eine gesättigte Fettsäure mit einer Kohlenstoffzahl von nicht weniger als 16 in Position 1 und 3 gebunden ist;
POP: 1,3-Dipalmitoyl-2-Oleoylglycerin ist;
StOSt: 1,3-Distearoyl-2-Oleoylglycerin ist;
POSt: ein Triglycerid ist, umfassend eine Oleoylgruppe in einer Position 2 und umfassend eine Palmitoylgruppe und eine Stearoylgruppe, separat in den Positionen 1 und 3; und
flüssiges Öl und/oder Fett: ein Triglycerid ist, an das eine Fettsäure mit einer Kohlenstoffzahl von nicht weniger als 16 gebunden ist, wobei das Triglycerid nicht weniger als 2 Doppelbindungen pro Molekül umfasst.

2. Schokolade nach Anspruch 1, wobei das Öl und/oder Fett ferner die folgende Anforderung (7) erfüllt:
(7) ein Massenverhältnis (POP/(POSt + StOSt)) des POP-Gehalts zu einer Summe des POSt-Gehalts und des StOSt-Gehalts beträgt nicht weniger als 0,50.

3. Verwendung einer Hartbutter zur Herstellung der Schokolade gemäß einem der Ansprüche 1 oder 2, wobei die Hartbutter die folgenden Anforderungen (a) bis (f) erfüllt:
(a) ein SOS-Gehalt beträgt 55 bis 83 Massen-%;
(b) ein POP-Gehalt beträgt 30 bis 60 Massen-%;
(c) ein StOSt-Gehalt beträgt 3 bis 19 Massen-%;
(d) ein POSt-Gehalt beträgt 3 bis 19 Massen-%;
(e) ein Gehalt an flüssigem Öl- und/oder Fett beträgt 10 bis 35 Massen-%; und
(f) ein Massenverhältnis (StOSt/POSt) des StOSt-Gehalts zum POSt-Gehalt beträgt nicht mehr als 2,5,
wobei
SOS: ein Triglycerid ist, an welchem Ölsäure in Position 2 gebunden ist, und eine gesättigte Fettsäure mit einer Kohlenstoffzahl von nicht weniger als 16 in Position 1 und 3 gebunden ist;
POP: 1,3-Dipalmitoyl-2-Oleoylglycerin ist;
StOSt: 1,3-Distearoyl-2-Oleoylglycerin ist;
POSt: ein Triglycerid ist, umfassend eine Oleoylgruppe in einer Position 2 und umfassend eine Palmitoylgruppe und eine Stearoylgruppe, separat in den Positionen 1 und 3; und
flüssiges Öl und/oder Fett: ein Triglycerid ist, an das eine Fettsäure mit einer Kohlenstoffzahl von nicht weniger als 16 gebunden ist, wobei das Triglycerid nicht weniger als Doppelbindungen pro Molekül umfasst.

4. Verwendung der Hartbutter nach Anspruch 3, wobei die Hartbutter ferner die folgende Anforderung (g) erfüllt:
(g) ein Massenverhältnis (POP/(POSt + StOSt)) von POP zu einer Summe des POSt-Gehalts und des StOSt-Gehalts beträgt nicht mehr als 3,0.

5. Verwendung der Hartbutter nach einem der Ansprüche 3 bis 4, wobei die Hartbutter umfasst:
45 bis 90 Massen-% eines Öls und/oder Fettes A, umfassend nicht weniger als 40 Massen-% POP; und 3 bis 28 Massen-% eines Öls und/oder Fettes B, umfassend nicht weniger als 60 Massen-% StOSt.

6. Verfahren zum Herstellen der Schokolade nach einem der Ansprüche 1 bis 2, das Verfahren umfassend:
Vermischen von 10 bis 35 Massen-% der wie in einem der Ansprüche 3 bis 5 spezifizierten Hartbutter zu einem Rohmaterial für die Schokolade;
Einstellen eines Öl- und/oder Fettgehalts in der Schokolade auf 25 bis 65 Massen-%; Tempern einer resultierenden Schokoladenschmelze; und
Abkühlen und Erstarren der Schokoladenschmelze.

7. Konditorei- und Backwaren, umfassend
die Schokolade nach einem der Ansprüche 1 bis 2 in Form einer Beschichtung oder einer Füllung.

## Revendications

1. Chocolat comprenant
une huile et/ou une matière grasse en une teneur de 25 à 65 % en masse, dans lequel l'huile et/ou la matière grasse satisfont aux exigences (1) à (6) suivantes:
(1) une teneur en SOS est de 60 à 86 % en masse ;
(2) une teneur en POP est de 20 à 40 % en masse ;
(3) une teneur en StOSt est de 10 à 25 % en masse ;
(4) une teneur en POSt est de 15 à 30 % en masse ;
(5) une teneur en huile et/ou matière grasse liquide est de 14 à 30 % en masse ; et
(6) un rapport massique (StOSt/POSt) de la teneur en StOSt sur la teneur en POSt n'est pas supérieur à 1,2,
dans lequel
SOS : un triglycéride sur lequel l'acide oléique est lié en position 2 et un acide gras saturé ayant un nombre de carbone non inférieur à 16 est lié en positions 1 et 3 ;
POP : 1,3-dipalmitoyl-2-oléoylglycérine ;
STOSt : 1,3-distéaroyl-2-oléoylglycérine ;
POSt : un triglycéride comprenant un groupe oléoyleen position 2 et comprenant un groupe palmitoyle et un groupe stéaroyle séparément en positions 1 et 3 ; et
huile et/ou matière grasse liquide : un triglycéride sur lequel un acide gras ayant un nombre de carbone non inférieur à 16 est lié, le triglycéride comprenant pas moins de 2 liaisons doubles par molécule.

2. Chocolat selon la revendication 1, dans lequel l'huile et/ou la matière grasse satisfont en outre à l'exigence (7) suivante :
(7) un rapport massique (POP/(POSt + StOSt)) de la teneur en POP sur une somme de la teneur en POSt et de la teneur en StOSt n'est pas inférieur à 0,50.

3. Utilisation d'un beurre dur pour fabriquer le chocolat selon la revendication 1 ou 2, dans laquelle le beurre dur répond aux exigences (a) à (f) suivantes :
(a) une teneur en SOS est de 55 à 83 % en masse;
(b) une teneur en POP est de 30 à 60 % en masse;
(c) une teneur en StOSt est de 3 à 19 % en masse;
(d) une teneur en POSt est de 3 à 19% en masse ;
(e) une teneur en huile et/ou matière grasse liquide est de 10 à 35 % en masse ; et
(f) un rapport massique (StOSt/POSt) de la teneur en StOSt sur la teneur en POSt n'est pas supérieur à 2,5,
dans lequel
SOS : un triglycéride sur lequel l'acide oléique est lié en position 2 et un acide gras saturé ayant un nombre de carbone non inférieur à 16 est lié en positions 1 et 3 ;
POP : 1,3-dipalmitoyl-2-oléoylglycérine ;
STOSt : 1,3-distéaroyl-2-oléoylglycérine ;
POSt : un triglycéride comprenant un groupe oléoyleen position 2 et comprenant un groupe palmitoyle et un groupe stéaroyle séparément en positions 1 et 3 ; et
huile et/ou matière grasse liquide : un triglycéride sur lequel un acide gras ayant un nombre de carbone non inférieur à 16 est lié, le triglycéride comprenant pas moins de 2 liaisons doubles par molécule.

4. Utilisation du beurre dur selon la revendication 3, dans laquelle le beurre dur satisfait en outre à l'exigence (g) suivante:
(g) un rapport massique (POP/(POSt + StOSt)) de la teneur en POP sur une somme de la teneur en POSt et de la teneur en StOSt n'est pas supérieur à 3,0.

5. Utilisation du beurre dur selon l'une quelconque des revendications 3 à 4, dans laquelle le beurre dur comprend:
de 45 à 90 % en masse d'une huile et/ou d'une matière grasse A comprenant au moins 40 % en masse de POP ; et de 3 à 28 % en masse d'une huile et/ou d'une matière grasse B comprenant pas moins de 60 % en masse de StOSt.

6. Procédé de fabrication du chocolat selon l'une quelconque des revendications 1 à 2, ledit procédé comprenant :
le mélange de 10 à 35 % en masse de beurre dur comme spécifié dans une quelconque des revendications 3 à 5 en une matière première pour le chocolat ;
l'ajustement d'une teneur en huile et/ou matière grasse dans le chocolat à 25 à 65 % en masse ; le traitement par tempérage d'un chocolat fondu résultant ; et
le refroidissement et la solidification du chocolat fondu.

7. Produits de confiserie et de boulangerie comprenant
le chocolat selon l'une quelconque des revendications 1 à 2 sous la forme d'un enrobage ou d'un fourrage.
